(19) Europäisches Patentamt
European Patent Office
Office européen des brevets

(11) **EP 3 855 352 B1**

(12) **FASCICULE DE BREVET EUROPEEN**

(45) Date de publication et mention
de la délivrance du brevet:
**16.08.2023 Bulletin 2023/33**

(21) Numéro de dépôt: **21150871.8**

(22) Date de dépôt: **11.01.2021**

(51) Classification Internationale des Brevets (IPC):
***G06V 40/13*** *(2022.01)* ***H04B 5/00*** *(2006.01)*

(52) Classification Coopérative des Brevets (CPC):
**H04B 5/0037; G06V 40/1306**

(54) **PROCEDE D'ACQUISITION D'EMPREINTES DIGITALES**

VORRICHTUNG ZUM ERFASSEN VON FINGERABDRÜCKEN

METHOD FOR ACQUIRING FINGERPRINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2020 FR 2000576**

(43) Date de publication de la demande:
**28.07.2021 Bulletin 2021/30**

(73) Titulaire: **Idemia Identity & Security France
92400 Courbevoie (FR)**

(72) Inventeur: **FOURRE, Joël-Yann
92400 COURBEVOIE (FR)**

(74) Mandataire: **Idemia
2, place Samuel de Champlain
92400 Courbevoie (FR)**

(56) Documents cités:
**EP-A1- 3 276 585          WO-A1-2008/107450
WO-A1-2018/203799          FR-A1- 3 044 443
FR-A1- 3 069 938**

**Description**

DOMAINE TECHNIQUE

L'invention concerne un procédé d'acquisition d'une information représentative d'une empreinte digitale, un dispositif et un système mettant en oeuvre le procédé.

ETAT DE LA TECHNIQUE ANTERIEURE

Face à une recrudescence des usurpations d'identité, des tentatives de fraudes et du piratage de données informatiques, la sécurisation des données et le contrôle d'accès sont devenus des enjeux majeurs. Les techniques basées sur une utilisation de données biométriques sont réputées pour leur haut niveau de fiabilité. Les empreintes digitales font partie des données biométriques couramment utilisées.

Certains capteurs d'empreintes digitales, appelés capteurs thermiques par la suite, utilisent des moyens de détection thermique pour récupérer des informations représentatives d'une empreinte digitale. Ces moyens de détection thermique peuvent correspondre à des éléments pyroélectriques, des diodes, des thermistances ou tout autre élément thermosensible apte à convertir une variation de température en une variation d'un paramètre représentatif d'une propriété électrique mesurable de l'élément sensible tel qu'un potentiel électrique à des bornes dudit élément, un courant électrique généré par ledit élément ou une variation d'une résistance électrique dudit élément.

Il existe deux types de capteurs thermiques : les capteurs thermiques dits passifs et les capteurs thermiques dits actifs. Les capteurs thermiques passifs exploitent une différence de température entre un doigt et le capteur pour réaliser une acquisition d'informations représentatives d'empreintes digitales. Ces capteurs sont donc efficaces tant qu'une différence de températures existe entre le capteur et le doigt mais deviennent inopérants dès que les températures du doigt et du capteur sont proches voire égales. En particulier, si le doigt reste appliqué sur le capteur, les températures s'équilibrent rapidement et le signal disparaît. Les capteurs thermiques actifs pallient cet inconvénient en associant chaque pixel dudit capteur à un élément chauffant. Cet élément chauffant dissipe une certaine quantité de chaleur dans le pixel. L'échauffement du pixel est mesuré au bout d'un certain temps d'acquisition, appelé « temps d'intégration ». En présence d'un doigt sur le capteur, les parties de peau en contact avec le capteur (les crêtes des empreintes digitales) absorbent une partie de la chaleur reçue par les pixels. En présence d'air, et notamment au niveau des vallées des empreintes digitales, les pixels conservent leur chaleur. L'échauffement des pixels en présence d'une crête est donc plus faible que l'échauffement des pixels en présence d'air. En mesurant la variation de température de chaque pixel, on est donc capable de reconstituer un motif d'une empreinte digitale.

Les éléments chauffants utilisent généralement l'effet Joule qui permet de produire de la chaleur en faisant passer un courant électrique dans un matériau conducteur. Ce type d'éléments chauffants nécessite donc une application d'une tension à ses bornes par une source de tension ou de courant. Certains dispositifs comportant un capteur thermique actif peuvent facilement comprendre ou être reliés à une source de tension ou de courant stable. D'autres dispositifs, tels que les cartes à puces, peuvent difficilement intégrer une source de tension ou de courant stable, telle qu'une pile ou une batterie. En effet, intégrer une pile ou une batterie dans une carte à puce présente un coût important et pose des problèmes de recyclage. Par ailleurs, une carte à puce n'est pas nécessairement reliée physiquement à un terminal de lecture devant lire des informations qu'elle contient mais peut communiquer avec celui-ci par communication par champ proche (Near Field Communication (NFC) en terminologie anglo-saxonne).

Une communication NFC est basée sur un couplage magnétique entre deux bobinages placés à proximité l'un de l'autre. Dans une communication NFC dite passive, lorsqu'un bobinage (appelé aussi antenne) d'une carte à puce capte un champ électromagnétique généré par un bobinage d'un terminal de lecture, le bobinage de la carte à puce génère un courant électrique qui permet d'alimenter électriquement la carte à puce. Sous l'effet du champ électromagnétique produit par le terminal de lecture, le bobinage de la carte à puce forme donc une alimentation électrique de ladite carte à puce. On dit alors que la carte est alimentée à distance, c'est-à-dire qu'à aucun moment elle n'est en contact physique à une source d'alimentation électrique. La carte à puce reçoit alors une puissance électrique dépendante de la puissance du champ, mais aussi d'une distance entre la carte à puce et le terminal. Lorsque la carte à puce comprend un capteur thermique actif, celui-ci est alimenté électriquement par l'énergie électrique reçue par la communication NFC. La puissance maximale disponible pour le chauffage des éléments chauffants de la carte à puce dépend donc de la distance entre la carte et le terminal et peut varier en fonction de mouvements d'un utilisateur présentant la carte devant le terminal. Cette situation présente un inconvénient important car, lors de la présentation de la carte à puce devant le terminal, l'utilisateur ne sait pas si la puissance disponible pour le chauffage des pixels par les éléments chauffants a été suffisante pour obtenir des informations représentatives de l'empreinte digitale de qualité suffisante. Certaines cartes à puce n'activent le capteur d'empreinte que lorsque le champ électromagnétique est suffisant ce qui implique que l'utilisateur doit chercher comment positionner sa carte par rapport au terminal pour obtenir un champ électromagnétique suffisant ou est amené à saisir un code PIN au lieu d'utiliser la reconnaissance biométrique.

Le document FR3069938 décrit un dispositif de capture d'empreinte papillaire qui permet de s'affranchir des difficultés d'intégration de transistors de sélection dans une matrice d'éléments sensibles constitués chacun d'une capsule en matériau thermo-résistif.

Le document FR3044443 décrit un procédé de capture d'un motif thermique permettant d'améliorer la qualité de la capture dudit motif thermique et/ou d'exploiter des informations liées au taux d'humidité d'un élément dont le motif thermique est mesuré.

Le document PCT/SE2018/050418 décrit un dispositif biométrique qui utilise l'énergie électrique produite par un champ électrique variant temporellement pour acquérir une représentation biométrique d'un utilisateur.

Il est souhaitable de pallier ces inconvénients de l'état de la technique et permettre l'utilisation d'un capteur d'empreinte même lorsque le niveau de champ est faible, sans le ralentir lorsque ce dernier est suffisant. Il est notamment souhaitable de proposer une méthode permettant notamment de déterminer, lorsqu'un utilisateur présente une carte à puce comportant un capteur thermique actif devant un terminal, quand le chauffage des pixels par les éléments chauffants a été suffisant pour obtenir des informations représentatives de l'empreinte digitale de qualité suffisante. Ce procédé doit prendre en compte que la capture des informations représentatives de l'empreinte digitale par le capteur thermique actif doit se faire dans un temps raisonnable, i.e. le plus vite possible, pour ne pas nuire à l'ergonomie d'utilisation de la carte à puce.

EXPOSE DE L'INVENTION

Selon un premier aspect de l'invention, l'invention concerne un procédé d'acquisition d'une information représentative d'une empreinte digitale exécuté par un dispositif comprenant un capteur thermique actif sur lequel est posée une partie corporelle porteuse d'une empreinte digitale lors d'une présentation à distance dudit dispositif devant un terminal de lecture produisant un champ électromagnétique apte à générer une alimentation électrique dans ledit dispositif, ledit capteur comprenant une pluralité de pixels, chaque pixel comprenant un élément thermosensible apte à convertir une variation de température en une variation d'un paramètre représentatif d'une propriété électrique mesurable dudit élément thermosensible, dit paramètre électrique, chaque pixel étant associé à un élément chauffant adapté pour chauffer ledit pixel et étant relié à un circuit de lecture apte à mesurer les variations dudit paramètre électrique. Le procédé comprend : pour chaque pixel : lancer une phase d'activation de chauffage comprenant : effectuer une première réinitialisation du circuit de lecture relié audit pixel ; et, activer un chauffage dudit pixel par l'élément chauffant correspondant audit pixel ; mettre fin à la première réinitialisation après une durée de chauffage prédéterminée ; mettre fin au chauffage par l'élément chauffant lorsqu'une énergie de chauffage produite dans le pixel par ledit élément chauffant atteint une énergie de chauffage prédéterminée ; et, mesurer une première information représentative des variations du paramètre électrique dudit pixel après une durée d'attente prédéterminée suite à la fin du chauffage, la première information correspondant à une période, dite période d'intégration, comprise entre la fin de la première réinitialisation et la fin de la durée d'attente prédéterminée ; l'information représentative de l'empreinte digitale étant obtenue à partir de ladite première information mesurée pour chaque pixel.

Le procédé de l'invention permet donc de déterminer automatiquement quand le chauffage des pixels par les éléments chauffants a été suffisant pour obtenir des informations représentatives de l'empreinte digitale de qualité suffisante.

Selon un mode de réalisation, suite à la mesure de la première information, le procédé comprend pour chaque pixel : effectuer une seconde réinitialisation du circuit de lecture relié audit pixel ; mesurer une deuxième information représentative des variations du paramètre électrique dudit pixel après une période égale à la période d'intégration suite à la fin de la seconde réinitialisation ; et, calculer une troisième information représentative des variations du paramètre électrique dudit pixel sous forme d'une différence entre ladite première et ladite deuxième information ; l'information représentative de l'empreinte digitale étant obtenue à partir de la troisième information calculée pour chaque pixel.. Utiliser une différence entre la première information et la deuxième information permet d'éliminer des signaux parasites de type basses fréquences.

Selon un mode de réalisation, le capteur thermique actif comprend des pixels, dits pixels de référence, non destinés à capturer une information représentative d'une partie d'empreinte digitale, et adaptés pour générer un signal électrique en présence d'un doigt sur ledit capteur thermique actif, ledit signal étant insensible à une présence ou pas de peau sur ledit pixel de référence ; et en ce que l'énergie de chauffage produite par un élément chauffant dans chaque pixel destiné à générer une information représentative d'une partie d'une empreinte digitale est estimée en utilisant au moins un pixel de référence.

Selon un mode de réalisation, le procédé comprend pour chaque pixel : mesurer une tension fournie par l'alimentation électrique du dispositif ; fixer une tension d'alimentation de l'élément chauffant, dite tension de chauffage, correspondant audit pixel à une valeur au plus égale à la tension fournie par l'alimentation électrique du dispositif ; et, déterminer que l'énergie de chauffage produite dans le pixel par ledit élément chauffant atteint l'énergie de chauffage prédéterminée lorsqu'une durée suivant la fin de la première réinitialisation atteint une durée déduite à partir de la tension de chauffage.

De cette manière, l'énergie consommée par le dispositif reste toujours compatible avec l'énergie fournie par l'alimentation électrique dudit dispositif.

Selon un mode de réalisation, le procédé comprend pour chaque pixel : mesurer une tension fournie par l'alimentation électrique du dispositif ; fixer une valeur d'une tension d'alimentation de l'élément chauffant correspondant audit pixel à une valeur prédéfinie ; lorsque la valeur prédéfinie est inférieure ou égale à la tension fournie par l'alimentation électrique du dispositif, déterminer que l'énergie de chauffage produite dans le pixel par ledit élément chauffant atteint l'énergie de chauffage prédéterminée lorsqu'une durée suivant la fin de la première réinitialisation atteint une durée déduite à partir de la valeur prédéfinie ; et, mettre fin audit procédé lorsque la valeur prédéfinie est supérieure à la tension fournie par l'alimentation électrique du dispositif.

Selon un deuxième aspect de l'invention, l'invention concerne un dispositif comprenant un capteur thermique actif permettant une acquisition d'une information représentative d'une empreinte digitale lorsqu'une partie corporelle porteuse d'une empreinte digitale est posée sur ledit capteur thermique, ledit dispositif étant adapté pour être alimenté électriquement à distance par un terminal de lecture, ledit capteur comprenant une pluralité de pixels, chaque pixel comprenant un élément thermosensible apte à convertir une variation de température en une variation d'un paramètre représentatif d'une propriété électrique mesurable dudit élément, dit paramètre électrique, chaque pixel étant associé à un élément chauffant adapté pour chauffer ledit pixel et étant relié à un circuit de lecture apte à mesurer les charges électriques générées par ladite capacité. Le dispositif comprend : pour chaque pixel : des moyens d'activation pour activer un chauffage dudit pixel par l'élément chauffant correspondant audit pixel ; des moyens de réinitialisation pour effectuer une réinitialisation du circuit de lecture relié audit pixel; des moyens de contrôle pour mettre fin à la réinitialisation ; des moyens de contrôle pour mettre fin au chauffage par l'élément chauffant lorsqu'une énergie de chauffage produite dans le pixel par ledit élément chauffant atteint une énergie de chauffage prédéterminée ; et des moyens de mesure pour mesurer une première information représentative d'une variation du paramètre électrique dudit pixel après une durée d'attente prédéterminée suite à la fin du chauffage ; et, des moyens d'obtention pour obtenir une information représentative de l'empreinte digitale à partir de ladite première information mesurée pour chaque pixel du capteur thermique actif.

Selon un troisième aspect de l'invention, l'invention concerne un programme d'ordinateur, comprenant des instructions pour mettre en oeuvre, par un dispositif, le procédé selon le premier aspect, lorsque ledit programme est exécuté par un processeur dudit dispositif. Selon un quatrième aspect, l'invention concerne des moyens de stockage, caractérisés en ce qu'ils stockent un programme d'ordinateur comprenant des instructions pour mettre en oeuvre, par un dispositif, le procédé selon le premier aspect, lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un exemple de dispositif mettant en oeuvre l'invention ;
[Fig. 2] illustre schématiquement un exemple d'architecture matérielle du dispositif mettant en oeuvre l'invention ;
[Fig. 3] illustre schématiquement un exemple de procédé d'acquisition d'informations représentatives d'une empreinte digitale selon l'invention ;
[Fig. 4] illustre schématiquement une vue de coupe d'une partie d'un pixel d'un capteur thermique actif compris dans le dispositif de la Fig. 1 ;
[Fig. 5] illustre schématiquement une vue de dessous d'une partie du capteur thermique actif ; et,
[Fig. 6] illustre schématiquement un exemple de circuit de lecture associé à une colonne de pixels du capteur thermique actif.

EXPOSE DETAILLE DE MODES DE REALISATION

L'invention est décrite par la suite dans un contexte où un dispositif mettant en oeuvre l'invention est une carte à puce comprenant un capteur thermique actif et communicant avec un terminal de lecture selon une communication NFC passive. L'invention s'applique cependant dans d'autres contextes et notamment pour d'autres dispositifs comprenant un capteur thermique actif pouvant être alimentés à distance par champ électromagnétique.

Par ailleurs, l'invention est décrite par la suite avec un capteur thermique actif dans lequel chaque pixel comprend un élément thermosensible de type capacité pyroélectrique qui, lorsqu'elle est soumise à une variation de température, génère une charge électrique.

D'autres éléments thermosensibles pourraient cependant être utilisés à la place des capacités pyroélectriques, tels que, par exemple, des diodes, des thermistances ou tout autre élément thermosensible apte à convertir une variation de température en une variation d'un paramètre représentatif d'une propriété électrique mesurable de l'élément sensible tel qu'un potentiel électrique à des bornes dudit élément, un courant électrique généré par ledit élément ou une variation d'une résistance électrique dudit élément.

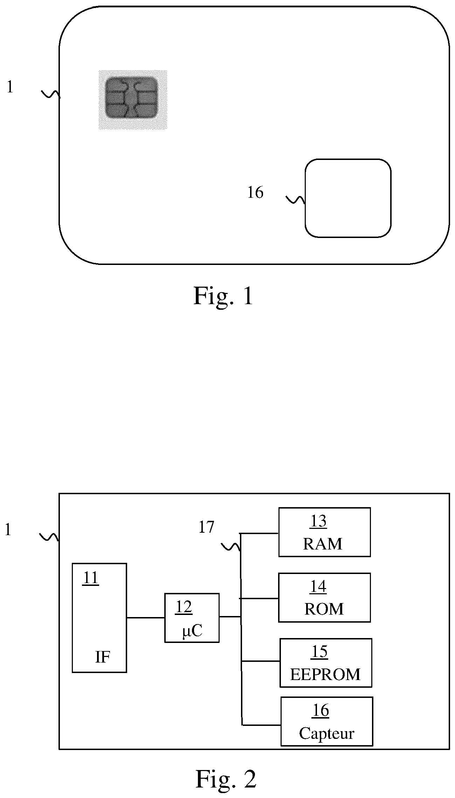

La **Fig. 1** illustre schématiquement un exemple de dispositif mettant en oeuvre l'invention. Le dispositif de la Fig. 1 est une carte à puce 1 comprenant un capteur thermique actif 16. La **Fig. 2** illustre schématiquement un exemple d'architecture matérielle du dispositif mettant en oeuvre l'invention.

La carte à puce 1 comporte une interface 11 configurée pour connecter la carte à puce 1 à un terminal de lecture (non représenté sur la Fig. 2). La carte à puce 1 est par exemple une carte bancaire et le terminal de lecture est un terminal de paiement. L'interface 11 est configurée pour permettre d'effectuer des échanges de données entre le terminal de lecture et la carte à puce 1, notamment de permettre au terminal de lecture d'envoyer des commandes à la carte à puce 1, et aussi permettre au terminal de lecture d'alimenter en énergie électrique la carte à puce 1. Dans un mode de réalisation, l'interface 11 est une interface NFC.

La carte à puce 1 comporte en outre un processeur, typiquement sous la forme d'un microcontrôleur 12, d'un microprocesseur ou d'un séquenceur (*i.e.* un composant programmable de type CPLD (circuit logique programmable complexe, « complex programmable logic device » en terminologie anglo-saxonne) en charge d'effectuer des traitements au sein de la carte à puce 1 : calculs, transferts de données, etc.

La carte à puce 1 comporte en outre une mémoire vive RAM (« Random Access Memory » en terminologie anglo-saxonne) 13, une mémoire morte ROM (« Read Only Memory » en terminologie anglo-saxonne) 14, et une mémoire non volatile, comme par exemple une mémoire EEPROM (« Electronically Erasable Programmable ROM » en terminologie anglo-saxonne) 15.

Par ailleurs, la carte à puce 1 comprend le capteur thermique actif 16. La mémoire vive 13, la mémoire morte 14, la mémoire non volatile 15 et le capteur thermique actif 16 sont reliés au microcontrôleur 12 par un bus de communication 17.

La mémoire morte 14 contient typiquement des instructions causant l'implémentation d'un environnement d'exécution JCRE au sein de la carte à puce 1, en s'appuyant sur la mémoire vive 13.

La mémoire vive 13 est utilisée pour stocker temporairement des données, telles que des variables et des résultats intermédiaires de calculs.

La mémoire non volatile 15 contient un ensemble d'instructions correspondant à des fonctions offertes par des librairies stockées sur la carte à puce 1. Ces fonctions sont regroupées en une pluralité de modules logiciels.

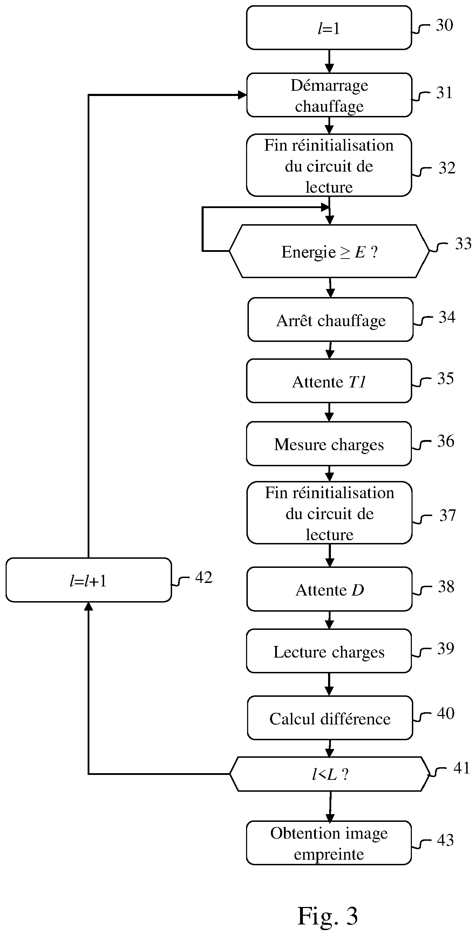

Lorsque la carte à puce 1 est alimentée en énergie par le terminal via l'interface 11, le microcontrôleur 12 est capable d'exécuter des instructions à partir de la mémoire morte 14 et/ou de la mémoire non volatile 15. Ces instructions permettent notamment de commander une acquisition d'informations représentatives d'une empreinte digitale par le capteur thermique actif 16 et d'exécuter le procédé décrit par la suite en relation avec la Fig. 3.

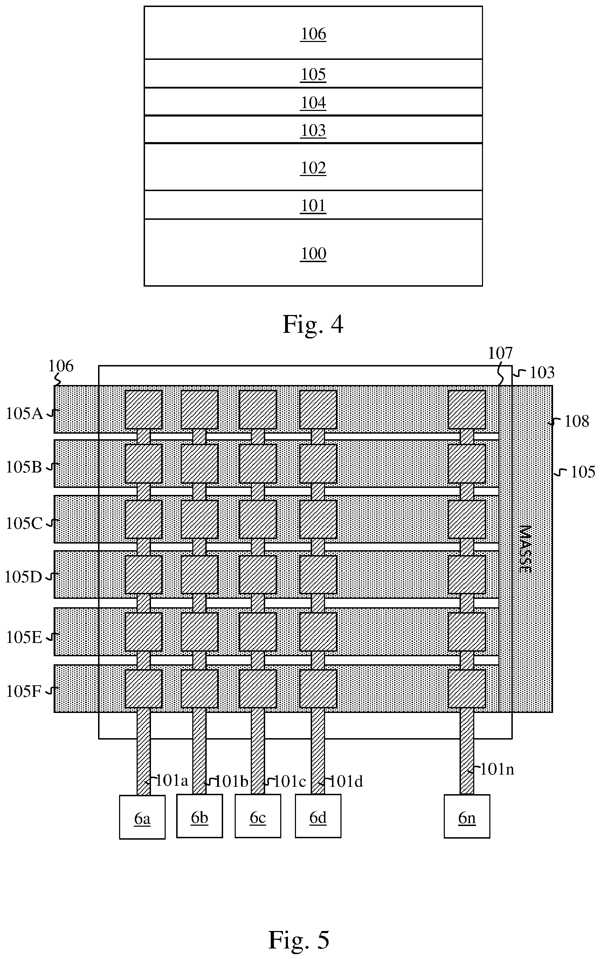

La **Fig. 4** illustre schématiquement une vue de coupe d'une partie d'un pixel du capteur thermique actif compris dans le dispositif de la Fig. 1.

Les pixels du capteur thermique actif 16 sont disposés sous forme d'une matrice de plusieurs lignes et plusieurs colonnes de pixels. Dans cette matrice, un pas entre les pixels est par exemple compris entre « 50 $\mu$m » et « 100 $\mu$m ». Par exemple, dans le cas d'un capteur thermique actif 16 de résolution 500 dpi (points par pouce, « dot per inch » en terminologie anglo-saxonne), le pas entre les pixels est de « 50,8 $\mu$m ».

Le pixel représenté en Fig. 4 est réalisé sur un substrat 100. Le substrat 100 est par exemple un substrat souple tel que du PEN (polyéthylène naphtalate) ou du PI (polyimide). Le pixel comprend des moyens de mesure thermique comprenant un élément thermosensible. Dans un mode de réalisation, l'élément sensible est une capacité pyroélectrique. Cette capacité pyroélectrique comprend une portion 102 en matériau pyroélectrique disposée entre une électrode inférieure 101 et une électrode supérieure 103. Le matériau pyroélectrique est par exemple un polymère comprenant du PVDF (polyfluorure de vinylidène), tel que du P(VDF-TrFE), que nous appellerons par la suite simplement *PVDF*. Les électrodes 101 et 103 comprennent chacune au moins un matériau électriquement conducteur, comme par exemple un matériau métallique tel que du titane, du molybdène, de l'aluminium, du cuivre, un oxyde conducteur tel que de l'ITO (oxyde d'indium ou d'étain) ou un polymère conducteur tel que du PEDOT:PSS.

Au-dessus de la capacité pyroélectrique se trouve une couche diélectrique 105 par exemple en matériau polymère servant d'isolant électrique entre la capacité pyroélectrique et une couche d'élément chauffant 105. La couche d'élément chauffant 105 comprend typiquement un matériau métallique. Le chauffage de la couche d'élément chauffant 105 est obtenu en faisant circuler un courant électrique dans l'élément chauffant. La couche d'élément chauffant 105 se comporte comme une résistance de valeur connue et constante. Lors d'une circulation de courant, l'élément chauffant produit de la chaleur par effet Joule. Une couche de protection 106 vient protéger le pixel. La couche de protection est typiquement en polymère (acrylate ou siloxane) chargé de particules inorganiques (par exemple du dioxyde de titane) afin d'offrir une protection aux rayures.

L'ordre de grandeur de l'épaisseur de chaque couche de l'empilement de couches formant le pixel de la Fig. 4 est de l'ordre du $\mu$m voire de la dizaine à la centaine de nm pour certaines couches.

Pour que le PVDF de la portion 102 acquière ses propriétés pyroélectriques (et aussi piézoélectriques), ce matériau est soumis, une fois pour toute la durée de vie de la capacité pyroélectrique, à un champ électrique d'environ « 100 volts » par $\mu$m d'épaisseur de PVDF. Les molécules du PVDF s'orientent et restent ainsi orientées même lorsque le PVDF n'est plus soumis au champ électrique. Le PVDF de la portion 102 est polarisé en appliquant une tension de polarisation initiale aux bornes des électrodes 101 et 103. Après cette polarisation initiale, lorsque la portion 102 est soumise à une variation de température, cette variation de température provoque une apparition d'un champ électrique générant des charges entre les électrodes 101 et 103.

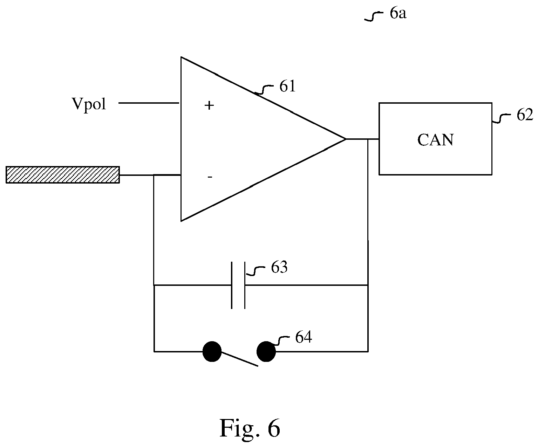

La portion 102 et les électrodes 101 et 103 formant une capacité pyroélectrique, les charges générées induisent une différence de potentiels électriques entre les électrodes 101 et 103. Lorsque la différence de potentiel entre les deux électrodes est fixe, les charges générées s'écoulent vers un circuit, appelé par la suite *circuit de lecture* que nous décrirons en relation avec les Figs. 5 et 6, en formant un courant qui par intégration permet de mesurer le nombre de charges générées et ainsi d'obtenir une information représentative d'une variation de température dans le pixel.

Pour un matériau pyroélectrique, les charges générées sont $Q = \gamma.S.\delta_T$, avec $\gamma$ un coefficient pyroélectrique (autour de $29\mu Cm^{-2}K^{-1}$ pour du P(VDF-TrFE)), $S$ une surface de la capacité pyroélectrique du pixel et $\delta_T$ une variation de température.

La **Fig. 5** illustre schématiquement une vue de dessous d'une partie du capteur thermique actif 16.

Dans la Fig. 5, parmi les couches de l'empilement de couches décrites en relation avec la Fig. 4, nous n'avons illustré que des éléments des deux électrodes 101 et 103 et de la couche d'élément chauffant 105. L'électrode supérieure 103 est représentée transparente pour qu'on puisse apercevoir l'élément chauffant qui se trouve derrière. Afin de simplifier la compréhension de la Fig. 5, les pixels sont représentés sous forme de carrés. On constate que dans ce capteur thermique actif, les pixels sont organisés en matrice.

Comme on peut le voir dans la Fig. 5, les pixels sont organisés en colonnes. Dans un mode de réalisation, les électrodes inférieures des pixels d'une même colonne (101a, 101b, 101c, 101d, et 101n) sont reliées électriquement les unes aux autres. On constate donc que les électrodes inférieures de chaque colonne de pixels sont indépendantes.

L'électrode inférieure de chaque colonne de pixels est reliée à un circuit de lecture commun à tous les pixels d'une même colonne. Par exemple, l'électrode inférieure 101a (respectivement 101b, 101c, 101d et 101n) est reliée au circuit de lecture 6a

(respectivement 6b, 6c, 6d et 6n). Nous décrivons par la suite un exemple de circuit de lecture en relation avec la Fig. 6.

Les portions 102 de matériau pyroélectrique (non représentées dans la Fig. 5) de l'ensemble des pixels du capteur thermique actif 16 sont par exemple réalisées sous forme d'une seule couche de matériau pyroélectrique recouvrant toutes les électrodes inférieures des pixels.

De manière similaire, les électrodes supérieures 103 de chaque pixel sont réalisées sous forme d'une seule couche de matériau électriquement conducteur recouvrant la couche de matériau pyroélectrique, et donc toutes les électrodes inférieures des pixels.

On peut noter que la capacité pyroélectrique d'un pixel est définie par la portion de PVDF comprise en regard des portions conductrices d'une ligne et d'une colonne.

La couche d'élément chauffant 105 est formée de portions 105A à 105F électriquement conductrices et chacune commune à tous les pixels d'une même ligne de pixels.

Chacune des portions 105A à 105F formant les éléments chauffants d'une ligne de pixels comprend deux extrémités 106 et 107 sur lesquelles une tension, dite *tension de chauffage,* est destinée à être appliquée. L'une de ces deux extrémités est par exemple reliée à la masse (par exemple l'extrémité 107 de la portion 105A) et une tension de chauffage non nul est appliquée sur l'autre de ces deux extrémités (par exemple l'extrémité 106 de la portion 105A) par des moyens de chauffage par exemple formés par une liaison électrique appliquant une tension sur cette extrémité. Un courant s'écoule alors de l'extrémité 106 vers l'extrémité 107 provoquant un échauffement par effet joule de la portion 105A, et donc un échauffement du matériau pyroélectrique de la portion 102 de tous les pixels de la ligne de pixels qui est chauffée par la portion 105A.

Dans l'exemple de la Fig. 5, les extrémités 107 des portions 105A à 105F sont reliées à une autre portion conductrice 108 qui est reliée à la masse.

Dans le capteur thermique actif 16, chaque portion 105A à 105F permet de chauffer chaque ligne de pixels indépendamment les unes des autres. Lorsqu'une ligne de pixels est chauffée, chaque circuit de lecture relié à une colonne mesure les charges générées par le pixel chauffé de ladite colonne.

Il est à noter que si l'épaisseur de l'ensemble des couches 101, 102, 103, 104, 105 et 106est faible par rapport à la distance entre deux pixels, les échanges de chaleur entre deux pixels adjacents sont négligeables. Si tel n'est pas le cas, un traitement supplémentaire du signal acquis pourra être réalisé pour tenir compte des échanges thermiques entre pixels voisins.

L'invention est toutefois adaptée à d'autres capteurs thermiques actifs qui ne comprendraient par exemple qu'un circuit de lecture pour tous les pixels du capteur ou un circuit de lecture pour chaque pixel, ou qui permettrait de chauffer indépendamment chaque pixel ou tous les pixels en même temps.

La **Fig. 6** illustre schématiquement un exemple de circuit de lecture associé à une colonne de pixels du capteur thermique actif 16.

La Fig. 6 prend l'exemple du circuit de lecture 6a relié à l'électrode inférieure 101a. Tous les autres circuits de lecture de la Fig. 5 sont identiques.

L'électrode inférieure 101a est reliée à une entrée du circuit 6a correspondant à une entrée inverseuse d'un amplificateur opérationnel 61. Un potentiel électrique de polarisation *Vpol* est appliqué sur une entrée non inverseuse de l'amplificateur opérationnel 61. L'amplificateur opérationnel 61 comprend une sortie rebouclée sur l'entrée inverseuse par l'intermédiaire d'une capacité, dite capacité d'intégration, 63. Un interrupteur 64 est relié en parallèle à la capacité d'intégration 63 et permet de court-circuiter cette capacité. La sortie de l'amplificateur opérationnel est également reliée à un convertisseur analogique numérique 62.

La **Fig. 3** illustre schématiquement un exemple de procédé d'acquisition d'informations représentatives d'une empreinte digitale selon l'invention.

Le procédé d'acquisition est exécuté sous le contrôle du microcontrôleur 12, lorsque la carte à puce 1 est à proximité d'un terminal apte à alimenter la carte à puce 1 par NFC. Comme nous l'avons vu plus haut, le capteur thermique actif 16 est adapté pour que chaque ligne de pixels soit chauffée indépendamment des autres lignes. Dans un mode de réalisation, les lignes de pixels sont numérotées de « 1 » à « L » et sont parcourues une à une.

Dans une étape 30, le microcontrôleur 12 initialise une variable *I*, représentant un numéro de ligne, à « 1 ». Lors de l'étape 30, le microcontrôleur 12 réinitialise le circuit de lecture relié à chaque pixel de la ligne numéro *I*. La réinitialisation est obtenue en fermant l'interrupteur 64 de chaque circuit de lecture. De cette manière, on vide la capacité d'intégration 63 de toutes les charges qu'elle aurait pu accumuler.

Dans une étape 31, le microcontrôleur 12 active le chauffage de la ligne numéro *I*. On note que la réinitialisation du circuit de lecture relié à chaque pixel de la ligne numéro *I* pourrait se faire en cours de chauffage (*i.e.* au cours de l'étape 31).

Dans une étape 32, le microcontrôleur 12 met fin à la réinitialisation du circuit de lecture relié à chaque pixel de la ligne numéro *I* en ouvrant l'interrupteur 64 correspondant après une durée de chauffage prédéterminée *D1*. La durée de chauffage prédéterminée *D1* correspond à une durée de stabilisation des composants et circuits électriques du capteur thermique actif 16 suite à des perturbations liées au démarrage du chauffage.

Dans un capteur thermique actif, lorsqu'un doigt est posé sur ledit capteur, chaque pixel produit un signal électrique représentatif d'une partie d'une empreinte digitale. La partie de l'empreinte digitale correspond à un point. Il faut que chaque signal ait atteint une amplitude suffisante pour que ce signal soit exploitable, c'est-à-dire qu'il ait atteint une amplitude suffisamment importante par rapport à un bruit du système. Lorsqu'une carte à puce est alimentée à distance par un terminal de lecture par NFC, l'énergie électrique reçue par la carte à puce dépend de la distance entre la carte à puce et le terminal de lecture. L'amplitude du signal produit par le capteur thermique actif de la carte étant dépendant de l'énergie dissipée dans l'élément chauffant, et cette dernière étant limitée par l'énergie électrique reçue par la carte à puce, il est très difficile de savoir si et quand l'amplitude du signal produit par chaque pixel du capteur thermique actif atteint une amplitude suffisante. En effet, la distance entre la carte à puce et le terminal de lecture est inconnue et peut varier. La demanderesse a observé que dans un capteur thermique actif, chaque pixel produit un signal dont l'amplitude est proportionnelle à une énergie de chauffage diffusée dans ledit pixel. Par ailleurs, sur une plage de temps de « 0,1 » à « 20 » millisecondes, cette amplitude est très peu dépendante du temps pendant lequel cette énergie a été diffusée. Cette propriété est utilisée dans une étape 33 suivante afin de déterminer quand les signaux produits par les pixels du capteur thermique actif 16 sont exploitables (*i.e.* ont une amplitude suffisante) pour effectuer une reconnaissance d'empreintes.

Au cours de l'étape 33, le microcontrôleur 12 attend que l'énergie de chauffage produite dans chaque pixel de la ligne de pixels numéro *I* par la portion de la couche d'élément chauffant 105 correspondant à ladite ligne atteigne une énergie de chauffage prédéterminée *E*. Cette énergie de chauffage prédéterminée *E* a été déterminée lors d'une phase préalable d'entraînement. L'énergie de chauffage prédéterminée *E* permet d'obtenir un niveau de signal prédéterminé sans doigt appliqué sur le capteur thermique actif 16. On suppose ici que chaque élément chauffant se comporte comme une résistance électrique de valeur connue *R*. Connaissant cette valeur de résistance *R*, on peut connaître la puissance électrique *P* dissipée par l'élément chauffant en mesurant soit le courant circulant dans l'élément chauffant, soit la tension aux bornes de l'élément chauffant. L'énergie de chauffage *Ec* dissipée par l'élément chauffant est alors l'intégrale de la puissance mesurée sur une période de mesure. Dans un mode de réalisation, le microcontrôleur 12 mesure périodiquement avec une période $\Delta t$ la tension de chauffage *U* aux bornes de l'élément chauffant. A partir de la tension de chauffage *U*, le microcontrôleur 12 détermine une énergie de chauffage élémentaire *Ei*,

$$Ei = \Delta t \times \frac{U^2}{R}$$

. L'énergie de chauffage *Ec* est une somme des énergies de chauffage élémentaires *Ei* depuis la fin de la réinitialisation du circuit de lecture lors de l'étape 32.

Il est à noter que contrôler l'énergie dans chaque pixel est équivalent à contrôler l'énergie d'une bande de chauffage. En effet, le rapport entre ces deux énergies est connu et dépend uniquement de la géométrie de la portion conductrice. Plus précisément, il est égal à la résistance de la portion conductrice de chauffage en regard du pixel divisée par la résistance totale de la portion conductrice de la ligne.

Pendant l'étape 33, pour chaque colonne de pixels, du fait de l'ouverture de l'interrupteur 64, les charges électriques générées par la capacité pyroélectrique du pixel chauffé de la colonne s'accumulent dans la capacité d'intégration 63. Comme nous l'avons vu plus haut, les charges reçues par la capacité d'intégration 63 d'un circuit de lecture sont une conséquence d'une variation de température de la capacité pyroélectrique d'un pixel relié à ce circuit de lecture. On obtient alors une tension électrique *Vout* en sortie de l'amplificateur opérationnel 61 :

$$Vout = Q.Cref + Vpol$$

où *Q* correspond aux charges électriques générées par la capacité pyroélectrique et *Cref est* une valeur de la capacité d'intégration 63. La tension *Vout* est donc proportionnelle à la variation de température et est une information représentative de l'empreinte digitale. La tension électrique *Vout* est lue et échantillonnée par le convertisseur analogique numérique 62.

Lorsque l'énergie de chauffage *Ec* produite dans chaque pixel de la ligne de pixels chauffée par ladite portion de la couche d'élément chauffant atteint l'énergie de chauffage prédéterminée *E*, lors d'une étape 34, le microcontrôleur met fin au chauffage par ladite portion.

Dans une étape 35, le microcontrôleur 12 se met en attente pendant une durée d'attente *T1* suite à la fin du chauffage. La durée d'attente *T1* représente une durée permettant à la chaleur produite par l'élément chauffant d'atteindre la surface du capteur, c'est-à-dire la couche de protection 106. Cette durée d'attente *T1* permet d'obtenir des amplitudes pour les signaux produits par les pixels maximales. La durée d'attente *T1* a été déterminée, par exemple, lors de la phase d'entraînement.

Dans une étape 36, le microcontrôleur 12 mesure une tension $Vout_1$ en sortie du convertisseur analogique numérique 62 de chaque circuit de lecture. La tension $Vout_1$ est une première information représentative des charges générées par la capacité pyroélectrique du pixel correspondant au circuit de lecture. Cette première information correspond aux charges produites par la capacité pyroélectrique pendant une période de durée *D* comprise entre la fin de la réinitialisation du circuit de lecture relié à chaque pixel de la ligne numéro *I* (étape 32) et la fin de la durée d'attente T1 (étape 35). Une fois la tension $Vout_1$ mesurée, le microcontrôleur 12 ferme l'interrupteur 64 afin de réinitialiser le circuit de lecture relié à chaque pixel de la ligne de pixels numéro *I*.

Dans une étape 37, le microcontrôleur 12 met fin à la réinitialisation du circuit de lecture relié à chaque pixel de la ligne de pixels numéro *I* en ouvrant l'interrupteur 64.

Dans une étape 38, le microcontrôleur 12 se met en attente pendant une période de durée *D* suite à la fin de la réinitialisation de l'étape 37.

Dans une étape 39, le microcontrôleur 12 mesure une tension $Vout_2$ en sortie du convertisseur analogique numérique 62 de chaque circuit de lecture. La tension $Vout_2$ est une seconde information représentative des charges générées par la capacité pyroélectrique du pixel correspondant au circuit de lecture. Cette seconde information correspond aux charges produites par la capacité pyroélectrique sans chauffage. La mesure de la tension $Vout_2$ se fait pendant le refroidissement du capteur thermique actif 16, à un moment où il reste suffisamment de chaleur résiduelle dans le capteur pour obtenir un signal exploitable de la part de chaque pixel précédemment chauffé.

Dans une étape 40, le microcontrôleur 12 calcule une différence *DIFF* entre la tension $Vout_1$ et la tension $Vout_2$.

$$DIFF = Vout_1 - Vout_2$$

Le calcul de la différence *DIFF* permet d'éliminer de la tension $Vout_1$ des signaux parasites de type basses fréquences. La différence *DIFF* est une troisième information représentative des charges générées par la capacité pyroélectrique du pixel correspondant au circuit de lecture.

A ce stade, le microcontrôleur 12 obtient une valeur *DIFF* pour chaque pixel de la ligne de pixels chauffée.

Dans une étape 41, le microcontrôleur vérifie si chaque ligne de pixels du capteur thermique actif 16 a été traitée (*i.e.* si la variable *I* est inférieure au nombre de lignes *L*).

Si *I<L*, l'étape 41 est suivie d'une étape 42 au cours de laquelle la variable *I* est incrémentée d'une unité.

Lorsque toutes les lignes de pixels ont été traitées (*i.e.* *I=L*), le microcontrôleur 12 a obtenu une valeur *DIFF* pour chaque pixel du capteur thermique actif 16. L'ensemble des valeurs *DIFF* obtenues forme une information représentative d'une empreinte digitale à partir de laquelle le microcontrôleur 12 peut former une image de l'empreinte digitale lors d'une étape 43.

Dans un mode de réalisation du procédé décrit en relation avec la Fig. 3, les étapes 37 à 40 ne sont pas réalisées. Dans ce mode de réalisation, le microcontrôleur 12 obtient uniquement une tension $Vout_1$ pour chaque pixel du capteur thermique actif 16, chaque tension $Vout_1$ étant une information représentative des charges générées par la capacité pyroélectrique dudit pixel. L'ensemble des tensions $Vout_1$ obtenues forme alors l'information représentative d'une empreinte digitale à partir de laquelle le microcontrôleur 12 peut former une image de l'empreinte digitale lors de l'étape 43.

Dans le mode de réalisation décrit en relation avec la Fig. 3, le microcontrôleur 12 doit attendre que chaque pixel d'une ligne de pixels chauffée ait reçu une énergie de chauffage égale à l'énergie de chauffage prédéterminée *E* pour procéder, pour chaque pixel de la ligne, à la mesure d'une valeur représentative d'une partie de l'empreinte digitale (*i.e.* $Vout_1$ ou *DIFF*). Lorsqu'un doigt est posé sur le capteur thermique actif 16, le signal électrique produit par chaque pixel dépend de la présence d'air ou de peau sur ledit pixel. Ainsi, même s'il est chauffé de la même manière, un pixel en contact avec la peau produit un signal électrique différent qu'un pixel en contact avec l'air. C'est d'ailleurs le principe utilisé dans les capteurs thermiques pour obtenir une image d'empreinte digitale. Lors d'un chauffage, un pixel en contact avec la peau produit un signal électrique d'amplitude plus faible qu'un pixel en contact avec de l'air. En effet, la peau absorbant une partie de la chaleur produite par un élément chauffant, la variation de température d'un pixel en contact avec la peau est plus faible que la variation de température d'un pixel en contact avec l'air.

Dans un mode de réalisation, l'énergie de chauffage reçue par les pixels n'est pas mesurée pour chaque pixel mais déduite de l'énergie de chauffage reçue par des pixels de référence. Ainsi, le capteur thermique actif 16 comprend, par exemple pour chaque ligne de pixels, au moins un pixel de référence apte à générer un signal électrique en présence d'un doigt sur ledit capteur insensible à la présence ou pas de peau sur ledit pixel de référence. Ces pixels de référence, situés généralement en bout de lignes de pixels, ne sont donc pas destinés à capturer une information représentative d'une partie d'empreinte digitale, mais uniquement à permettre une mesure de l'énergie de chauffage reçue par les autres pixels de la ligne. Les pixels de référence sont par exemple recouverts d'une couche de matériau isolant thermiquement sur laquelle vient se poser le doigt. Lorsque le microcontrôleur 12 détermine qu'un pixel de référence d'une ligne de pixel a reçu une énergie de chauffage Ec égale à l'énergie de chauffage prédéterminée *E*, il en déduit que tous les autres pixels de la ligne de pixels chauffée ont reçu la même énergie de chauffage.

Jusque-là, nous avons considéré que l'énergie de chauffage émise par chaque élément chauffant dépendait uniquement de l'énergie électrique reçue par la carte à puce provenant de l'alimentation électrique par NFC. En pratique, le microcontrôleur 12 comprend des moyens de contrôle de la puissance de chauffage générée par les éléments chauffants. Ces moyens de contrôle permettent d'éviter que l'énergie électrique consommée par la carte à puce (et notamment l'énergie de chauffage) ne dépasse l'énergie électrique fournie par l'alimentation électrique de la carte à puce (c'est-à-dire fournie par le bobinage de la carte à puce), dite *énergie NFC*. En effet, un dépassement de l'énergie NFC provoquerait une brusque chute de tension dans la carte à puce et donc un échec de chaque processus en cours dans la carte à puce. Dans un mode de réalisation, lors de l'étape 31, le microcontrôleur 12 mesure une tension $U_{bob}$ représentative de la tension aux bornes du bobinage de la carte à puce.

Le microcontrôleur 12 compare cette tension $U_{bob}$ avec une tension prédéterminée $U_{min}$. Si $U_{min} > U_{bob}$, le microcontrôleur 12 considère que l'énergie électrique fournie par le bobinage de la carte à puce est trop faible pour permettre une acquisition d'une information d'empreinte digitale efficace et met fin au procédé de la Fig. 3.

Si $U_{bob} \geq U_{min}$, le microcontrôleur 12 augmente ensuite progressivement, par exemple toutes les « 5 µs », la tension de chauffage *U* à l'extrémité 106 de chaque portion 105A à 105F jusqu'à atteindre une tension prédéterminée $U_H$ inférieure à $U_{min}$, ou jusqu'à ce que la tension $U_{bob}$ devienne inférieure à $U_{min}$. En effet, plus

la tension de chauffage augmente, plus la puissance consommée augmente, plus le courant dans la bobine augmente et donc plus la tension aux bornes de la bobine diminue. En contrôlant la tension de chauffage, la puissance consommée est maitrisée. En effet, si la puissance consommée était trop élevée, la tension aux bornes de la bobine pourrait diminuer au point que le microcontrôleur ne soit plus alimenté suffisamment et que la transaction échoue. Ainsi, après chaque augmentation de la tension de chauffage, le microcontrôleur mesure à nouveau une tension $U_{bob}$ et si celle-ci est inférieure à $U_{min}$, le microcontrôleur met fin au processus d'augmentation de la tension de chauffage U. De cette manière, l'énergie électrique consommée par la carte à puce est toujours inférieure ou égale à l'énergie NFC. En mesurant la tension $U_{bob}$ et en augmentant progressivement la tension de chauffage *U* il est ainsi possible de contrôler la puissance de chauffage générée par les éléments chauffants mis en oeuvre par le microcontrôleur 12.

Connaissant ainsi la tension de chauffage, le microcontrôleur 12 peut en déduire la puissance de chauffage reçue par l'élément chauffant sur chaque portion 105A à 105F et ainsi une durée *T2* nécessaire pour que chaque pixel reçoive l'énergie de chauffage prédéterminée *E* avec une telle puissance P de chauffage. En effet, T2=E/P. Lors de l'étape 33, le microcontrôleur 12 attend la durée *T2* suite à la fin de la réinitialisation de l'étape 32 et met fin au chauffage lors de l'étape 34 lorsque la durée *T2* est atteinte.

Dans un autre mode de réalisation, lors de la mise en oeuvre des moyens de contrôle de la puissance de chauffage lors de l'étape 31, le microcontrôleur 12 vérifie qu'une tension prédéfinie $U_{max}$ est inférieure ou égale à la tension $U_{bob}$. Si $U_{max} \leq U_{bob}$, le microcontrôleur augmente progressivement la tension de chauffage à l'extrémité 106 de chaque portion 105A à 105F jusqu'à atteindre une tension prédéterminée $U_h < U_{max}$. Dans ce cas, la durée *T2* nécessaire pour que chaque pixel reçoive l'énergie de chauffage prédéterminée *E* est prédéfinie puisqu'elle dépend de la tension $U_{max}$ qui est elle-même prédéfinie. Lors de l'étape 33, le microcontrôleur 12 attend la durée *T2* suite à la fin de la réinitialisation de l'étape 32 et met fin au chauffage lors de l'étape 34 lorsque la durée *T2* est atteinte. Si $U_{max} > U_{bob}$, le microcontrôleur 12 considère que l'énergie électrique fournie par le bobinage de la carte à puce est trop faible pour permettre une acquisition d'une information d'empreinte digitale efficace et met fin au procédé de la Fig. 3.

Dans un mode de réalisation, les durées de chauffage sont de l'ordre de « 100 µs » à « 5 ms » et la durée d'attente *T1* est de l'ordre de quelques centaines de microsecondes. Dans un mode de réalisation, l'énergie de chauffage prend des valeurs situées entre « 20 » à « 100 nJ » par pixel.

Dans un mode de réalisation, une ligne de pixels comprend « 128 » pixels, avec une résistance de « 300 » Ohm sur l'ensemble de sa longueur. La ligne est alors chauffée avec des puissances de l'ordre « 5 » à « 20 » mW, sous des tensions de chauffage de l'ordre de « 1.2 » à « 2.5 » V.

## Revendications

1. Procédé d'acquisition d'une information représentative d'une empreinte digitale exécuté par un dispositif comprenant un capteur thermique actif sur lequel est posée une partie corporelle porteuse d'une empreinte digitale lors d'une présentation à distance dudit dispositif devant un terminal de lecture produisant un champ électromagnétique apte à générer une alimentation électrique dans ledit dispositif, ledit capteur comprenant une pluralité de pixels, chaque pixel comprenant un élément thermosensible apte à convertir une variation de température en une variation d'un paramètre représentatif d'une propriété électrique mesurable dudit élément thermosensible, dit paramètre électrique, chaque pixel étant associé à un élément chauffant adapté pour chauffer ledit pixel et étant relié à un circuit de lecture apte à mesurer les variations dudit paramètre électrique, le procédé comprenant :

    pour chaque pixel :

    lancer une phase d'activation de chauffage comprenant : effectuer (30) une première réinitialisation du circuit de lecture relié audit pixel ; et, activer (31) un chauffage dudit pixel par l'élément chauffant correspondant audit pixel ;
    mettre fin (32) à la première réinitialisation après une durée de chauffage prédéterminée ;
    mettre fin au chauffage par l'élément chauffant (34) lorsqu'une énergie de chauffage produite dans le pixel par ledit élément chauffant atteint une énergie de chauffage prédéterminée (33) ; et,
    mesurer (36) une première information représentative des variations du paramètre électrique dudit pixel après une durée d'attente prédéterminée suite à la fin du chauffage, la première information
    correspondant à une période, dite période d'intégration, comprise entre la fin de la première réinitialisation et la fin de la durée d'attente prédéterminée ;
    effectuer (36) une seconde réinitialisation du circuit de lecture relié audit pixel ;
    mesurer (39), sans chauffage par l'élément chauffant, une deuxième information représentative des variations du paramètre électrique dudit pixel après une période égale à la période d'intégration suite à la fin (37) de la seconde réinitialisation; et,
    calculer (40) une troisième information représentative des variations du paramètre électrique dudit pixel sous forme d'une différence entre ladite première et ladite deuxième information ;
l'information représentative de l'empreinte digitale étant obtenue à partir de la troisième information calculée pour chaque pixel.

2. Procédé selon la revendication 1, dans lequel le capteur thermique actif comprend des pixels, dits pixels de référence, non destinés à capturer une information représentative d'une partie d'empreinte digitale, et adaptés pour générer un signal électrique en présence d'un doigt sur ledit capteur thermique actif, ledit signal étant insensible à une présence ou pas de peau sur ledit pixel de référence ; et en ce que l'énergie de chauffage produite par un élément chauffant dans chaque pixel destiné à générer une information représentative d'une partie d'une empreinte digitale est estimée en utilisant au moins un pixel de référence.

3. Procédé selon la revendication 1 ou 2, dans lequel mettre fin au chauffage par l'élément chauffant (34) lorsqu'une énergie de chauffage produite dans le pixel par ledit élément chauffant atteint une énergie de chauffage prédéterminée (33) comprend :

    - mesurer périodiquement, par le microcontrôleur, une tension de chauffage aux bornes de l'élément chauffant ;
    - calculer ladite énergie de chauffage produite dans le pixel par ledit élément chauffant à partir de ladite tension de chauffage mesurée périodiquement aux bornes de l'élément chauffant ; et
    - mettre fin au chauffage par l'élément chauffant lorsque l'énergie de chauffage calculée atteint ladite énergie de chauffage prédéterminée.

4. Procédé selon la revendication 1 ou 2, dans lequel le procédé comprend pour chaque pixel :

    mesurer une tension fournie par l'alimentation électrique du dispositif ;
    fixer une tension d'alimentation de l'élément chauffant, dite tension de chauffage, correspondant audit pixel à une valeur au plus égale à la tension fournie par l'alimentation électrique du dispositif ; et,
    déterminer que l'énergie de chauffage produite dans le pixel par ledit élément chauffant atteint l'énergie de chauffage prédéterminée lorsqu'une durée suivant la fin de la première réinitialisation atteint une durée déduite à partir de la tension de chauffage.

5. Procédé selon la revendication 1 ou 2, ledit procédé comprenant pour chaque pixel : augmenter progressivement une U tension d'alimentation de l'élément chauffant, dite tension de chauffage, correspondant audit pixel jusqu'à atteindre une tension prédéterminée $U_H$ inférieure à une valeur minimale prédéterminée $U_{min}$ ou jusqu'à ce qu'une tension $U_{bob}$ fournie par l'alimentation électrique du dispositif devienne inférieure à ladite valeur minimale prédéterminée ; déterminer que l'énergie de chauffage produite dans le pixel par ledit élément chauffant atteint l'énergie de chauffage prédéterminée lorsqu'une durée suivant la fin de la première réinitialisation atteint une durée déduite à partir de la tension de chauffage ainsi augmentée.

6. Procédé selon la revendication 1 ou 2, dans lequel le procédé comprend pour chaque pixel :

 mesurer une tension fournie par l'alimentation électrique du dispositif ;
 fixer une valeur d'une tension d'alimentation de l'élément chauffant correspondant audit pixel à une valeur prédéfinie ;
 lorsque la valeur prédéfinie est inférieure ou égale à la tension fournie par l'alimentation électrique du dispositif, déterminer que l'énergie de chauffage produite dans le pixel par ledit élément chauffant atteint l'énergie de chauffage prédéterminée lorsqu'une durée suivant la fin de la première réinitialisation atteint une durée déduite à partir de la valeur prédéfinie ; et,
 mettre fin audit procédé lorsque la valeur prédéfinie est supérieure à la tension fournie par l'alimentation électrique du dispositif.

7. Dispositif comprenant un capteur thermique actif permettant une acquisition d'une information représentative d'une empreinte digitale lorsqu'une partie corporelle porteuse d'une empreinte digitale est posée sur ledit capteur thermique, ledit dispositif étant adapté pour être alimenté électriquement à distance par un terminal de lecture produisant un champ électromagnétique, ledit capteur comprenant une pluralité de pixels, chaque pixel comprenant un élément thermosensible apte à convertir une variation de température en une variation d'un paramètre représentatif d'une propriété électrique mesurable dudit élément thermosensible, dit paramètre électrique, chaque pixel étant associé à un élément chauffant adapté pour chauffer ledit pixel et étant relié à un circuit de lecture apte à mesurer les variations dudit paramètre électrique, dans lequel le dispositif est configuré pour :
pour chaque pixel :

 lancer une phase d'activation de chauffage comprenant : effectuer (30) une première réinitialisation du circuit de lecture relié audit pixel ; et, activer (31) un chauffage dudit pixel par l'élément chauffant correspondant audit pixel ;
 mettre fin (32) à la première réinitialisation après une durée de chauffage prédéterminée ;
 mettre fin au chauffage par l'élément chauffant (34) lorsqu'une énergie de chauffage produite dans le pixel par ledit élément chauffant atteint une énergie de chauffage prédéterminée (33) ; et,
 mesurer (36) une première information représentative des variations du paramètre électrique dudit pixel après une durée d'attente prédéterminée suite à la fin du chauffage, la première information correspondant à une période, dite période d'intégration, comprise entre la fin de la première réinitialisation et la fin de la durée d'attente prédéterminée ;
 effectuer (36) une seconde réinitialisation du circuit de lecture relié audit pixel ;
 mesurer (39), sans chauffage par l'élément chauffant, une deuxième information représentative des variations du paramètre électrique dudit pixel après une période égale à la période d'intégration suite à la fin (37) de la seconde réinitialisation; et,
 calculer (40) une troisième information représentative des variations du paramètre électrique dudit pixel sous forme d'une différence entre ladite première et ladite deuxième information ;
 l'information représentative de l'empreinte digitale étant obtenue à partir de la troisième information calculée pour chaque pixel.

8. Programme d'ordinateur, comprenant des instructions pour mettre en oeuvre, par un dispositif (1), le procédé selon l'une quelconque des revendications 1 à 6, lorsque ledit programme est exécuté par un processeur (12) dudit dispositif.

9. Moyens de stockage, stockant un programme d'ordinateur comprenant des instructions pour mettre en oeuvre, par un dispositif (1), le procédé selon l'une quelconque des revendications 1 à 6, lorsque ledit programme est exécuté par un processeur (12) dudit dispositif.

**Patentansprüche**

1. Verfahren zur Erfassung einer für einen Fingerabdruck repräsentativen Information, das von einer Vorrichtung ausgeführt wird, die einen aktiven Wärmesensor enthält, auf den bei einer Fernpräsentation der Vorrichtung vor einem ein elektromagnetisches Feld, das eine Stromversorgung in der Vorrichtung erzeugen kann, erzeugenden Lese-Endgerät ein einen Fingerabdruck tragender Körperteil gelegt wird, wobei der Sensor eine Vielzahl von Pixeln enthält, wobei jedes Pixel ein wärmeempfindliches Element enthält, das fähig ist, eine Temperaturänderung in eine Änderung eines für eine messbare elektrische Eigenschaft des wärmeempfindlichen Elements repräsentativen Parameters umzuwandeln, elektrischer Parameter genannt, wobei jedes Pixel einem Heizelement zugeordnet ist, das geeignet ist, das Pixel zu erwärmen, und mit einer Leseschaltung verbunden ist, die fähig ist, die Änderungen des elektrischen Parameters zu messen, wobei das Verfahren für jedes Pixel enthält: Starten einer Heizungsaktivierungsphase, die enthält:

> Ausführen (30) einer ersten Rücksetzung der mit dem Pixel verbundenen Leseschaltung; und Aktivieren (31) einer Erwärmung des Pixels durch das dem Pixel entsprechende Heizelement;
> Beenden (32) der ersten Rücksetzung nach einer vorbestimmten Heizdauer;
> Beenden der Erwärmung durch das Heizelement (34), wenn eine im Pixel vom Heizelement erzeugte Heizenergie eine vorbestimmte Heizenergie (33) erreicht; und
> Messen (36) einer für die Änderungen des elektrischen Parameters des Pixels repräsentativen ersten Information nach einer vorbestimmten Wartedauer nach dem Ende des Erwärmens, wobei die erste Information einer Periode, Integrationsperiode genannt, entspricht, die zwischen dem Ende der ersten Rücksetzung und dem Ende der vorbestimmten Wartedauer liegt;
> Ausführen (36) einer zweiten Rücksetzung der mit dem Pixel verbundenen Leseschaltung;
> Messen (39), ohne Erwärmen durch das Heizelement, einer für die Änderungen des elektrischen Parameters des Pixels nach einer Periode gleich der Integrationsperiode nach dem Ende (37) der zweiten Rücksetzung repräsentativen zweiten Information; und
> Berechnen (40) einer für die Änderungen des elektrischen Parameters des Pixels repräsentativen dritten Information in Form einer Differenz zwischen der ersten und der zweiten Information;
> wobei die für den Fingerabdruck repräsentative Information ausgehend von der für jedes Pixel berechneten dritten Information erhalten wird.

2. Verfahren nach Anspruch 1, wobei der aktive Wärmesensor Pixel enthält, Bezugspixel genannt, die nicht dazu bestimmt sind, eine für einen Teil eines Fingerabdrucks repräsentative Information zu erfassen, und geeignet sind, in Anwesenheit eines Fingers auf dem aktiven Wärmesensor ein elektrisches Signal zu erzeugen, wobei das Signal für eine Anwesenheit oder nicht von Haut auf dem Bezugspixel unempfindlich ist; und dass die von einem Heizelement in jedem Pixel, das dazu bestimmt ist, eine für einen Teil eines Fingerabdrucks repräsentative Information zu erzeugen, erzeugte Heizenergie unter Verwendung mindestens eines Bezugspixels geschätzt wird.

3. Verfahren nach Anspruch 1 oder 2, wobei das Beenden der Erwärmung durch das Heizelement (34), wenn eine vom Heizelement im Pixel erzeugte Heizenergie eine vorbestimmte Heizenergie (33) erreicht, enthält:

> - periodisches Messen, durch den Mikrocontroller, einer Heizspannung an den Anschlüssen des Heizelements;
> - Berechnen der vom Heizelement im Pixel erzeugten Heizenergie ausgehend von der periodisch an den Anschlüssen des Heizelements gemessenen Heizspannung; und
> - Beenden der Erwärmung durch das Heizelement, wenn die berechnete Heizenergie die vorbestimmte Heizenergie erreicht.

4. Verfahren nach Anspruch 1 oder 2, wobei das Verfahren für jedes Pixel enthält:

> Messen einer von der Stromversorgung der Vorrichtung gelieferten Spannung;
> Festlegen einer dem Pixel entsprechenden Versorgungsspannung des Heizelements, Heizspannung genannt, auf einen Wert höchstens gleich der von der Stromversorgung der Vorrichtung gelieferten Spannung; und
> Bestimmen, dass die vom Heizelement im Pixel erzeugte Heizenergie die vorbestimmte Heizenergie erreicht, wenn eine Dauer nach dem Ende der ersten Rücksetzung eine Dauer erreicht, die ausgehend von der Heizspannung abgeleitet wird.

5. Verfahren nach Anspruch 1 oder 2, wobei das Verfahren für jedes Pixel enthält:

> progressives Erhöhen einer Versorgungsspannung U des dem Pixel entsprechenden Heizelements, Heizspannung genannt, bis zum Erreichen einer vorbestimmten Spannung $U_H$ niedriger als ein vorbestimmter minimaler Wert $U_{min}$, oder bis eine von der Stromversorgung der Vorrichtung gelieferte Spannung $U_{bob}$ niedriger wird als der vorbestimmte minimale Wert;
> Bestimmen, dass die vom Heizelement im Pixel erzeugte Heizenergie die vorbestimmte Heizenergie erreicht, wenn eine Dauer nach dem Ende der ersten Rücksetzung eine Dauer erreicht, die ausgehend von der so erhöhten Heizspannung abgeleitet wird.

6. Verfahren nach Anspruch 1 oder 2, wobei das Verfahren für jedes Pixel enthält:

Messen einer von der Stromversorgung der Vorrichtung gelieferten Spannung;

Festlegen eines Werts einer Versorgungsspannung des dem Pixel entsprechenden Heizelements auf einen vordefinierten Wert;

wenn der vordefinierte Wert niedriger als die oder gleich der von der Stromversorgung der Vorrichtung gelieferte Spannung ist, Bestimmen, dass die vom Heizelement im Pixel erzeugte Heizenergie die vorbestimmte Heizenergie erreicht, wenn eine Dauer nach dem Ende der ersten Rücksetzung eine Dauer erreicht, die ausgehend vom vordefinierten Wert abgeleitet wird; und

Beenden des Verfahrens, wenn der vordefinierte Wert höher ist als die von der Stromversorgung der Vorrichtung gelieferte Spannung.

7. Vorrichtung, die einen aktiven Wärmesensor enthält, der eine Erfassung einer für einen Fingerabdruck repräsentativen Information erlaubt, wenn ein einen Fingerabdruck tragender Körperteil auf den Wärmesensor aufgelegt wird, wobei die Vorrichtung geeignet ist, von einem ein elektromagnetisches Feld erzeugenden Lese-Endgerät elektrisch fernversorgt zu werden, wobei der Sensor eine Vielzahl von Pixeln enthält, wobei jedes Pixel ein wärmeempfindliches Element enthält, das fähig ist, eine Temperaturänderung in eine Änderung eines für eine messbare elektrische Eigenschaft des wärmeempfindlichen Elements repräsentativen Parameters umzuwandeln, elektrischer Parameter genannt, wobei jedes Pixel einem Heizelement zugeordnet ist, das geeignet ist, das Pixel zu erwärmen, und mit einer Leseschaltung verbunden ist, die fähig ist, die Änderungen des elektrischen Parameters zu messen, wobei die Vorrichtung konfiguriert ist, um:
für jedes Pixel:

eine Heizungsaktivierungsphase zu starten, die enthält: Ausführen (30) einer ersten Rücksetzung der mit dem Pixel verbundenen Leseschaltung; und Aktivieren (31) einer Erwärmung des Pixels durch das dem Pixel entsprechende Heizelement;

Beenden (32) der ersten Rücksetzung nach einer vorbestimmten Heizdauer;

Beenden der Erwärmung durch das Heizelement (34), wenn eine im Pixel vom Heizelement erzeugte Heizenergie eine vorbestimmte Heizenergie (33) erreicht; und

Messen (36) einer für die Änderungen des elektrischen Parameters des Pixels nach einer vorbestimmten Wartedauer nach dem Ende des Erwärmens repräsentativen ersten Information, wobei die erste Information einer Periode, Integrationsperiode genannt, entspricht, die zwischen dem Ende der ersten Rücksetzung und dem Ende der vorbestimmten Wartedauer liegt;

Ausführen (36) einer zweiten Rücksetzung der mit dem Pixel verbundenen Leseschaltung;

Messen (39), ohne Erwärmen durch das Heizelement, einer für die Änderungen des elektrischen Parameters des Pixels nach einer Periode gleich der Integrationsperiode nach dem Ende (37) der zweiten Rücksetzung repräsentativen zweiten Information; und

Berechnen (40) einer für die Änderungen des elektrischen Parameters des Pixels repräsentativen dritten Information in Form einer Differenz zwischen der ersten und der zweiten Information;

wobei die für den Fingerabdruck repräsentative Information ausgehend von der für jedes Pixel berechneten dritten Information erhalten wird.

8. Computerprogramm, das Anweisungen enthält, um durch eine Vorrichtung (1) das Verfahren nach einem der Ansprüche 1 bis 6 durchzuführen, wenn das Programm von einem Prozessor (12) der Vorrichtung ausgeführt wird.

9. Speichereinrichtungen, die ein Computerprogramm speichern, das Anweisungen zur Durchführung, durch eine Vorrichtung (1), des Verfahrens nach einem der Ansprüche 1 bis 6 enthält, wenn das Programm von einem Prozessor (12) der Vorrichtung ausgeführt wird.

## Claims

1. Method for acquiring information representative of a fingerprint, executed by a device comprising an active thermal sensor on which a body part bearing a fingerprint is placed when said device is remotely presented in front of a reading terminal producing an electromagnetic field able to generate an electrical power supply in said device, said sensor comprising a plurality of pixels, each pixel comprising a thermosensitive element able to convert a change in temperature into a change in a parameter representative of a measurable electrical property of said thermosensitive element, called electrical parameter, each pixel being associated with a heating element designed to heat said pixel and being connected to a readout circuit able to measure the changes in said electrical parameter, the method comprising:
for each pixel:

starting a heating activation phase comprising:
performing (30) a first reset of the readout circuit connected to said pixel; and activating (31) heating of said pixel by the heating element corresponding to said pixel;
ending (32) the first reset after a predetermined heating time;

ending the heating by the heating element (34) when a heating energy produced in the pixel by said heating element reaches a predetermined heating energy (33); and measuring (36) a first piece of information representative of the changes in the electrical parameter of said pixel after a predetermined waiting time following the end of the heating, the first piece of information corresponding to a period, called integration period, comprised between the end of the first reset and the end of the predetermined waiting time;

performing (36) a second reset of the readout circuit connected to said pixel;

measuring (39), without heating by the heating element, a second piece of information representative of the changes in the electrical parameter of said pixel after a period equal to the integration period following the end (37) of the second reset; and

calculating (40) a third piece of information representative of the changes in the electrical parameter of said pixel in the form of a difference between said first and said second piece of information;

the information representative of the fingerprint being obtained on the basis of the third piece of information calculated for each pixel.

2. Method according to Claim 1, wherein the active thermal sensor comprises pixels, called reference pixels, which are not intended to sense information representative of a part of a fingerprint and are designed to generate an electrical signal in the presence of a finger on said active thermal sensor, said signal being insensitive to a presence or absence of skin on said reference pixel; and wherein the heating energy produced by a heating element in each pixel intended to generate information representative of a part of a fingerprint is estimated using at least one reference pixel.

3. Method according to Claim 1 or 2, wherein ending the heating by the heating element (34) when a heating energy produced in the pixel by said heating element reaches a predetermined heating energy (33) comprises:

- periodically measuring, by the microcontroller, a heating voltage across the terminals of the heating element;
- calculating said heating energy produced in the pixel by said heating element on the basis of said heating voltage periodically measured across the terminals of the heating element; and
- ending the heating by the heating element when the calculated heating energy reaches said predetermined heating energy.

4. Method according to Claim 1 or 2, wherein the method comprises for each pixel:

measuring a voltage supplied by the electrical power supply of the device;

setting a supply voltage of the heating element, called heating voltage, corresponding to said pixel to a value at most equal to the voltage supplied by the electrical power supply of the device; and

determining that the heating energy produced in the pixel by said heating element has reached the predetermined heating energy when a time following the end of the first reset reaches a time deduced from the heating voltage.

5. Method according to Claim 1 or 2, said method comprising for each pixel:

gradually increasing a supply voltage U of the heating element, called heating voltage, corresponding to said pixel until a predetermined voltage $U_H$ less than a predetermined minimum value $U_{min}$ has been reached or until a voltage $U_{bob}$ supplied by the electrical power supply of the device becomes less than said predetermined minimum value;

determining that the heating energy produced in the pixel by said heating element has reached the predetermined heating energy when a time following the end of the first reset reaches a time deduced from the heating voltage increased in this way.

6. Method according to Claim 1 or 2, wherein the method comprises for each pixel:

measuring a voltage supplied by the electrical power supply of the device;

setting a value of a supply voltage of the heating element corresponding to said pixel to a predefined value;

when the predefined value is less than or equal to the voltage supplied by the electrical power supply of the device, determining that the heating energy produced in the pixel by said heating element has reached the predetermined heating energy when a time following the end of the first reset reaches a time deduced from the predefined value; and

ending said method when the predefined value is greater than the voltage supplied by the electrical power supply of the device.

7. Device comprising an active thermal sensor for acquiring information representative of a fingerprint when a body part bearing a fingerprint is placed on said thermal sensor, said device being designed to be remotely supplied with electrical power by a reading terminal producing an electromagnetic field, said sensor comprising a plurality of pixels, each pixel comprising a thermosensitive element able to convert a change in temperature into a change in a parameter representative of a measurable electrical property of said thermosensitive element, called electrical parameter, each pixel being associated with a heating element designed to heat said pixel and being connected to a readout circuit able to measure the changes in said electrical parameter, wherein the device is configured to:
for each pixel:

start a heating activation phase comprising: performing (30) a first reset of the readout circuit connected to said pixel; and activate (31) heating of said pixel by the heating element corresponding to said pixel;
end (32) the first reset after a predetermined heating time;
end the heating by the heating element (34) when a heating energy produced in the pixel by said heating element reaches a predetermined heating energy (33); and
measure (36) a first piece of information representative of the changes in the electrical parameter of said pixel after a predetermined waiting time following the end of the heating, the first piece of information corresponding to a period, called integration period, comprised between the end of the first reset and the end of the predetermined waiting time;
perform (36) a second reset of the readout circuit connected to said pixel;
measure (39), without heating by the heating element, a second piece of information representative of the changes in the electrical parameter of said pixel after a period equal to the integration period following the end (37) of the second reset; and
calculate (40) a third piece of information representative of the changes in the electrical parameter of said pixel in the form of a difference between said first and said second piece of information;
the information representative of the fingerprint being obtained on the basis of the third piece of information calculated for each pixel.

8. Computer program comprising instructions for implementing, by a device (1), the method according to any one of Claims 1 to 6 when said program is executed by a processor (12) of said device.

9. Storage means storing a computer program comprising instructions for implementing, by a device (1), the method according to any one of Claims 1 to 6 when said program is executed by a processor (12) of said device.

Fig. 1

Fig. 2

Fig. 3

| 106 |
|---|
| 105 |
| 104 |
| 103 |
| 102 |
| 101 |
| 100 |

Fig. 4

Fig. 5

6a

Vpol

+ 61

- 

CAN 62

63

64

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3069938
- FR 3044443
- SE 2018050418 W